# EUROPEAN PATENT APPLICATION

(11) **EP 3 835 124 A1**
(43) Date of publication of application: **16.06.2021**
(21) Application number: 19847038.7
(22) Date of filing: 05.08.2019
(51) Int. Cl.: B60N 2/60

(54) **SEAT COVER**

(30) Priority: 06.08.2018 JP 2018147852
(71) Applicant: Delta Kogyo Co., Ltd., Aki-gun, Hiroshima 735-8501 (JP)
(72) Inventor: FUJITA, Etsunori, Aki-gun, Hiroshima 735-8501 (JP); KURASHITA, Takashi, Aki-gun, Hiroshima 735-8501 (JP); INOUE, Shogo, Aki-gun, Hiroshima 735-8501 (JP); OCHIAI, Naoki, Aki-gun, Hiroshima 735-8501 (JP)
(74) Representative: Hoffmann Eitle
(86) International application number: PCT/JP2019/030779
(87) International publication number: WO 2020/031982

(57) **Abstract**

Provided is a seat cover whose attachment work is easy and that can be manufactured at a low cost even if a material having excellent durability is used. The seat cover (1) of the present invention has a cushion cover part (10) and a back cover part (20), and since an upper portion (22) of the back cover part (20) is located at a position within a range from a pelvis top corresponding part to a chest middle corresponding part, the height range that it covers in a seat back part is shorter than that of a conventional seat cover that covers a range up to the vicinity of the bottom of a headrest. This can make the amount of a material used for forming the back cover part (20) smaller than conventionally to reduce a cost increase even if a more expensive material having high durability against friction is used. For example, even if a three-dimensional knitted fabric that can exhibit high durability against friction is used, the seat cover (1) can be manufactured at a low cost and is suitable for a seat of a home delivery vehicle that its occupant frequently gets in/out of.

## Description

### Technical Field

The present invention relates to a seat cover for covering a seat of a vehicle.

### Background Art

As a seat cover for covering a surface of a seat of a vehicle such as an automobile, those disclosed in Patent Documents 1 and 2 are known, for instance. In Patent Document 1, the cover is of a type that entirely covers a seat back part and a seat cushion part, and it is fixed to the seat with stretchable core materials such as rubber or the like being attached to peripheral edges of openings provided in part. In Patent Document 2, a cover for a seat back part and a cover for a seat cushion part are separately formed, fixing members such as hook-and-loop fasteners are attached to their rear surfaces, and the covers are fixed to a surface layer of a seat surface through the fixing members. Further, Patent Document 3 discloses a cushion for seat that uses a three-dimensional knitted fabric and is placed on a seat cushion part to be used. Note that the three-dimensional knitted fabric is a material used as a base cushion, a surface layer, and so on in a vehicle seat, as shown in Patent Document 4.

### Prior Art Document

### Patent Document

Patent Document 1: Japanese Patent Application Laid-open No. 2018-52256
Patent Document 2: Japanese Patent Application Laid-open No. 2016-97773
Patent Document 3: Japanese Patent Application Laid-open No. 2006-204884
Patent Document 4: Japanese Patent Application Laid-open No. 2007-126051

### Disclosure of the Invention

### Problems to Be Solved by the Invention

However, since the seat cover disclosed in Patent Document 1 has to be attached to entirely cover the seat back part and the seat cushion part, its attachment work takes time and is troublesome. Since the seat cover disclosed in Patent Document 2 is divided into the cover for the seat back part and the cover for the seat cushion part and they need to be attached separately, its attachment work is complicated and a reduction of the time taken for the work cannot be expected much. Further, the cushion for seat disclosed in Patent Document 3 is thin and can provide a comfortable cushioning property owing to the use of the three-dimensional knitted fabric. However, being designed mainly to achieve improvements in seating comfort and vibration absorption characteristic, and so on, it is not fixed to the seat not very firmly as compared with the seat covers disclosed in Patent Documents 1, 2.

A vehicle for home delivery (home delivery vehicle) stops at a relatively short travel distance, and a worker repeatedly gets in/out of the vehicle to deliver packages during this. That is, since a driver or any other occupant (worker) frequently gets in/out of the vehicle, a surface layer of the seat is torn by friction, and further, a cushioning member is often damaged if the use of the seat cover is continued while the surface layer is left torn. In particular, many of surface layers of seats of trucks used as home delivery vehicles are made of synthetic resin and are relatively thin in consideration of the cost and thus they themselves are inferior in durability to those used in ordinary vehicles, so that the aforesaid tearing of the surface layer and the damage to the cushioning member occur relatively early. A conventional measure when the damage to a seat has progressed to some degree is to change the seat at the time of vehicle inspection in many cases, but this costs considerably depending on the number of home delivery vehicles owned by a home delivery company.

In consideration of the above circumstances, the seat covers disclosed in Patent Documents 1, 2 can be used to reduce the damage to the seat itself. However, since the seat covers disclosed in Patent Documents 1, 2 are both configured to cover the whole seat including the seat back part and the seat cushion part, their attachment work is troublesome. Further, unless the seat cover itself has high durability, attaching the seat cover doesn't have much meaning, but covering the whole seat with a highly durable material costs high.

On the other hand, the cushion for seat of Patent Document 3 uses the three-dimensional knitted fabric, and owing to its rigidity, or together with the operation of the restoring force of its ground knitted fabrics and connecting yarns, the cushion for seat has high durability against friction and has a very high seat protecting function. However, being designed mainly to achieve the improvements in vibration absorption characteristics and so on as described above, this cushion for seat covers a range, of the seat back part, from a boundary position with the seat cushion part up to the vicinity of the bottom of a headrest, and in the seat cushion part as well, it has a size from the vicinity of the boundary with the seat back part up to the vicinity of a front edge, and using this as it is as a seat protecting cover is not cost-economical. Further, it is not intended for use in a vehicle that an occupant frequently gets in/out of, such as a home delivery vehicle, and for fixing it to the seat, band-shaped members are only wound around the seat. Therefore, its use for a seat of a home delivery vehicle that an occupant frequently gets in/out of has problems in terms of followability to body movement, displacement, and so on.

The present invention was made in consideration of the above and has an object to provide a seat cover that is excellent in followability to body movement and restoration property against displacement, whose attachment work is easy, and that can be manufactured at a low cost even if a material excellent in durability is used.

### Means for Solving the Problem

As a result of observing and studying breakage conditions of seats of home delivery service with the aim of solving the above problems, the present inventors have found out that a portable information terminal (handy terminal) for business use that a driver (worker) carries with him/her is often attached to a belt of his/her trousers and thus is located in a range from the vicinity of the side of the waist up to the vicinity of a hip-pocket, and when he/she sits on the seat, the handy terminal comes into contact with a place, in the seat back part, corresponding to the vicinity of the top of the pelvis, and damage concentrates in this place. It has also been found out that, in the seat cushion part, damage concentrates in the vicinity of a side portion with which the driver comes into contact when getting in/out of the vehicle and the vicinity of a front edge with which the vicinity of his/her knee back comes into contact during driving. Therefore, the present inventors thought that a seat cover in which its part near a boundary between a seat cushion part and a seat back part especially has high body movement followability and restoration property against displacement can reduce the damage to the seat, contribute to comfortable seating feeling, and appropriately exhibit the vibration absorption characteristic that the seat cover has. The present inventors further thought that limiting a range to be covered with the seat cover to a range in consideration of these points enables low-cost manufacture even if a material having excellent durability is used, and have completed the present invention.

Specifically, a seat cover of the present invention is
a seat cover which has a cushion cover part for covering a seat cushion part of a seat and a back cover part for covering a seat back part of the seat,
wherein a rear portion of the cushion cover part and a lower portion of the back cover part are connected through an attaching means having a band-shaped elastic member disposed near a boundary between the seat cushion part and the seat back part,
wherein, in a state in which the seat cover is attached to the seat cushion part and the seat back part, the rear portion of the cushion cover part and the lower portion of the back cover part are relatively lower in rigidity than portions closer to a front portion of the cushion cover part and closer to an upper portion of the back cover part, and
wherein the band-shaped elastic member is capable of exhibiting a function of returning the lower portion of the back cover part and the rear portion of the cushion cover part from displacement and a function of absorbing externally input vibration.

Preferably, the attaching means has, in addition to the band-shaped elastic member:
a first support plate fixed to a rear surface of the back cover part; and
a second support plate having one end portion joined to at least one of the lower portion of the back cover part and a lower portion of the first support plate and having another end portion joined to the rear portion of the cushion cover part,
the band-shaped elastic member connects at least one of the back cover part and the first support plate to the other end portion of the second support plate to bias an upper portion of the first support plate and the other end portion of the second support plate in an approaching direction, and
the second support plate is spread out in such a direction that the other end portion separates from the upper portion of the first support plate against elasticity of the band-shaped elastic member and is inserted from the other end portion together with the band-shaped elastic member and the rear portion of the cushion cover part to a gap located at the boundary between the seat cushion part and the seat back part to which the seat cover is to be attached, and the elasticity of the band-shaped elastic member presses the first support plate in a direction of a front surface of the seat back part and presses the second support plate in a direction of a lower surface of the seat back part.

Preferably, a front portion of the cushion cover part covers at least part of a front surface of the seat cushion part.

Preferably, the back cover part has such a size that an upper portion thereof is located within a range from a pelvis top corresponding part up to a chest middle corresponding part.

Preferably, the first support plate has a width within a range between two side supports bulging forward on both sides of the seat back part.

Preferably, the first support plate and the second support plate are plate-shaped members made of synthetic resin.

Preferably, the attaching means has an auxiliary fixing member for the cushion cover part, the auxiliary fixing member being coupled to the cushion cover part, extended around the seat cushion part or the seat back part, and connected to the second support plate inserted to the gap located at the boundary between the seat cushion part and the seat back part.

Preferably, the attaching means has an auxiliary fixing member for the back cover part, the auxiliary fixing member being coupled to the back cover part and extended to a rear surface side of the seat back part.

Preferably, at least the back cover part is formed of a three-dimensional knitted fabric.

### Effects of the Invention

In the seat cover of the present invention, the rear portion of the cushion cover part and the lower portion of the back cover part are connected to the vicinity of the boundary between the seat cushion part and the seat back part of the seat that is to be covered, through the attaching means having the band-shaped elastic member. In the attached state, owing to the connection through the band-shaped elastic member, the rear portion of the cushion cover part and the lower portion of the back cover part are relatively lower in rigidity than portions closer to the front portion of the cushion cover part fixed to the seat cushion part and closer to the upper portion of the back cover part fixed to the seat back part. Accordingly, in a portion corresponding to the buttocks to the waist, mobility increases, followability to the body movement is excellent, and the characteristic of absorbing vibration transmitted from a road surface and the vehicle body during traveling also improves. Further, even if displacement occurs when an occupant gets out (leaves the seat), the restoring force of the band-shaped elastic member quickly restores a predetermined position, so that the occupant can quickly sit on the seat cover when getting in again. As a result, characteristics such as the aforesaid body movement followability and vibration absorption characteristic that the seat cover has can be effectively exhibited.

Further, the seat cover has the cushion cover part and the back cover part, but by setting the position of the upper portion of the back cover part within the range from the pelvis top corresponding part up to the chest middle corresponding part, it is preferable to make the height range that it covers in the seat back part shorter than that of a conventional seat cover that covers a range up to the vicinity of the bottom of a headrest. This can make the amount of the material used for forming the back cover part smaller than conventionally and reduce a cost increase even if a more expensive material having high durability against friction than a two-dimensional fabric is used. Therefore, for example, even if a three-dimensional knitted fabric that has certain elasticity and can exhibit high durability against friction even if thin is used, the seat cover can be manufactured at a low cost and is suitable for a seat of a home delivery vehicle that an occupant frequently gets in/out of.

Further, the band-shaped elastic member of the attaching means presses the back cover part against the front surface of the seat back part and also presses the rear portion of the cushion cover part against the lower surface of the seat back part. Therefore, the attachment work is easy, and the attachment to many vehicles owned by a home delivery company and a changing work can be performed quickly.

### Brief Description of Drawings

[FIG. 1] FIG. 1 is a plan view of a seat cover according to one embodiment of the present invention.
[FIG. 2] FIG. 2 is a sectional view taken along the A-A line in FIG. 1.
[FIGs. 3] FIG. 3(a) is a sectional view taken along the B-B line in FIG. 1, FIG. 3(b) is a sectional view taken along the C-C line in FIG. 1, and FIG. 3(c) is a sectional view taken along the D-D line in FIG. 1.
[FIGs. 4] FIG. 4(a) is a front view illustrating a seat with the seat cover of the embodiment attached thereto, and FIG. 4(b) is a side view of FIG. 4(a).
[FIG. 5] FIG. 5 is a vertical sectional view illustrating an essential part of the seat to which the seat cover is attached.
[FIG. 6] FIG. 6 is a sectional view of a seat cushion part to which the seat cover is attached, taken along a substantially horizontal plane.
[FIG. 7] FIG. 7 is a traverse sectional view of a seat back part to which the seat cover is attached.
[FIGs. 8] FIG. 8(a) is a digital photographic image of the seat cover attached to the seat, photographed from a front direction, and FIG. 8(b) is a digital photographic image of the seat cover attached to the seat, photographed from a side direction.
[FIGs. 9] FIG. 9(a) is a digital photographic image of the seat cover attached to the seat, photographed from a rear direction of the seat cover, and FIG. 9(b) is a digital photographic image of an attaching means including a first support plate, a second support plate, and band-shaped elastic members, photographed from the rear direction in a state where the seat cover is not attached to the seat.
[FIG. 10] FIG. 10 is a sectional view illustrating an example of a three-dimensional knitted fabric used in the embodiment.
[FIG. 11] FIG. 11 is a plan view illustrating one of ground knitted fabrics of the three-dimensional knitted fabric.
[FIG. 12] FIG. 12 is a plan view illustrating the other ground knitted fabric of the three-dimensional knitted fabric.
[FIGs. 13] FIG. 13(a) is a chart illustrating a load-deflection characteristic of the first support plate, and FIG. 13(b) is an explanatory view of its measuring method.

### Description of Embodiments

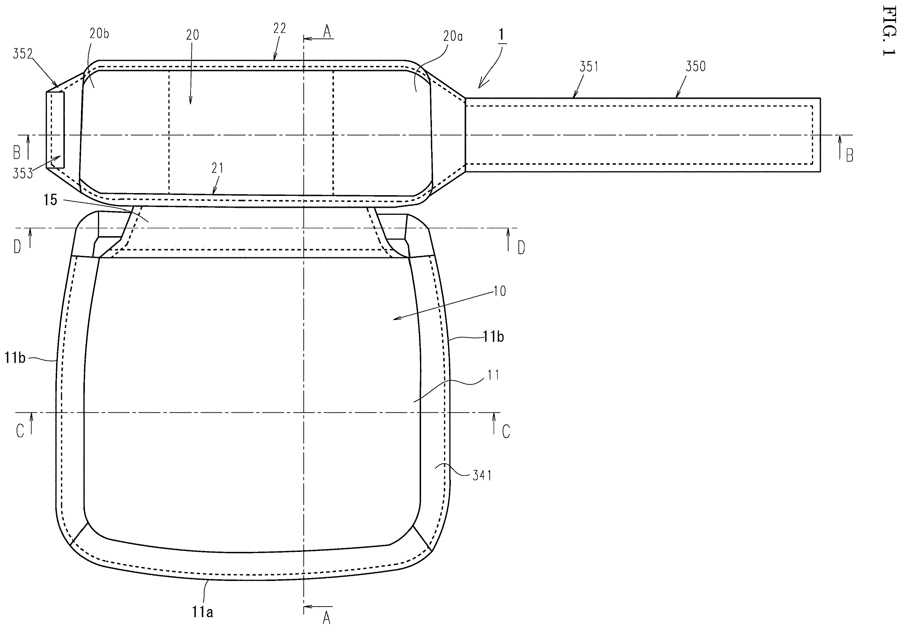

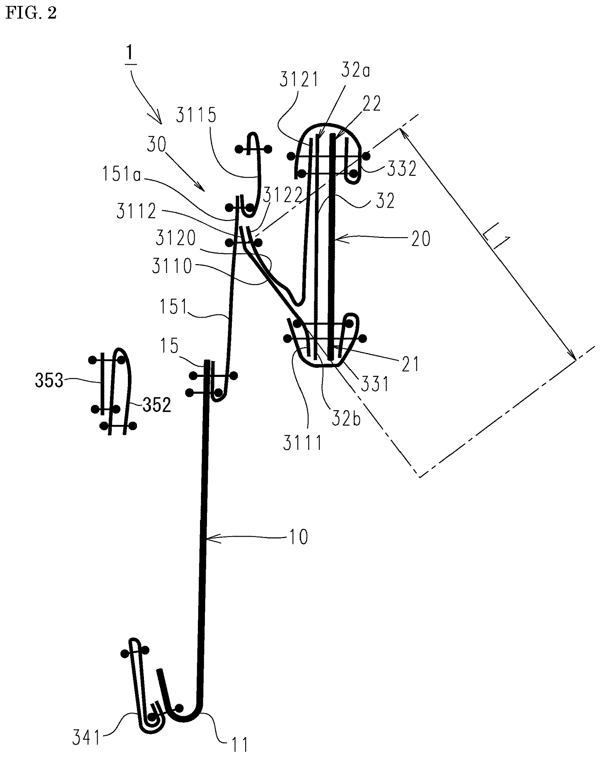

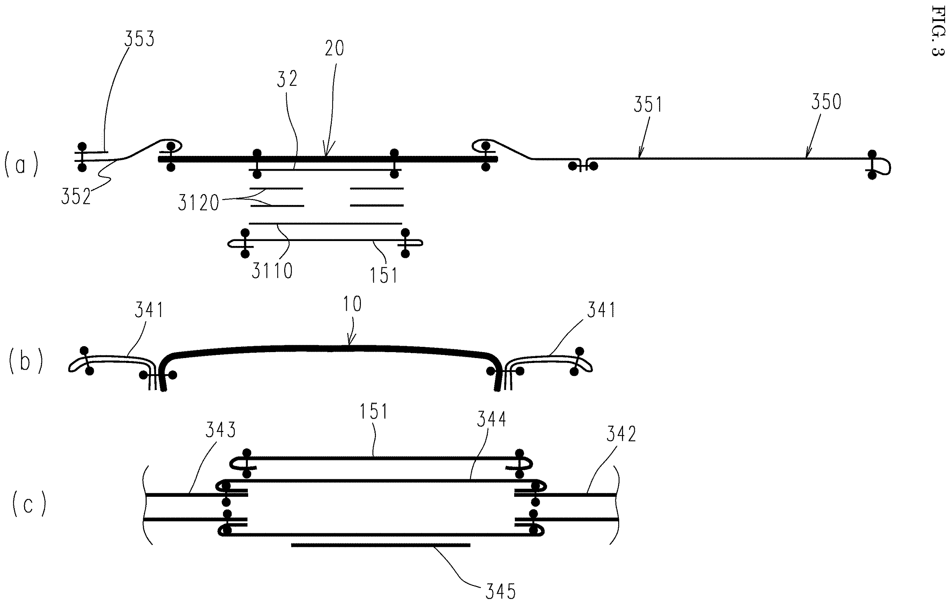

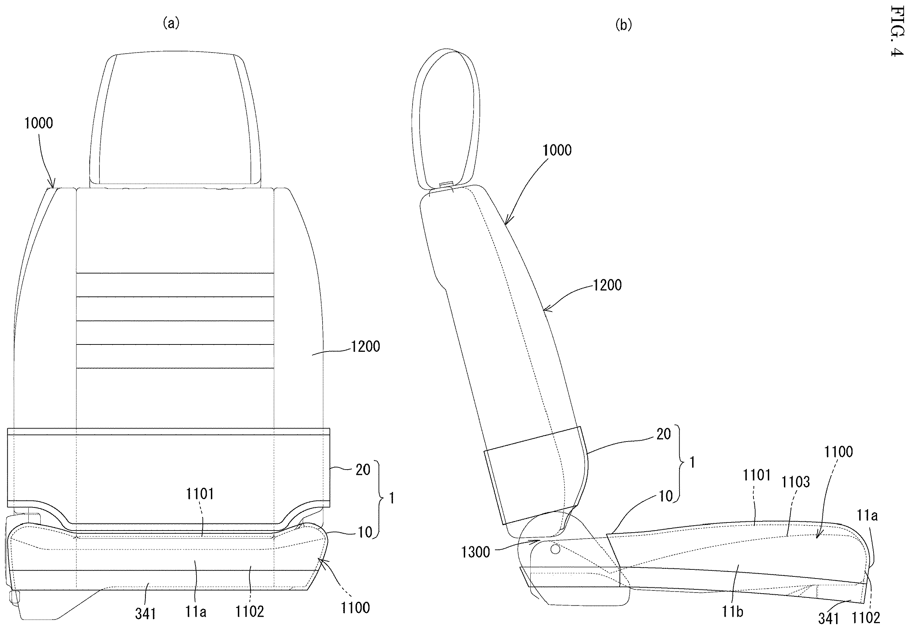

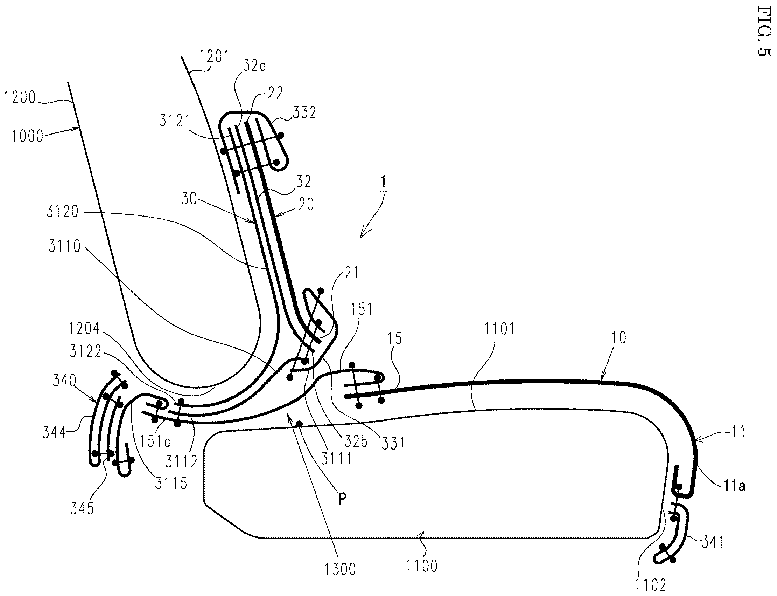

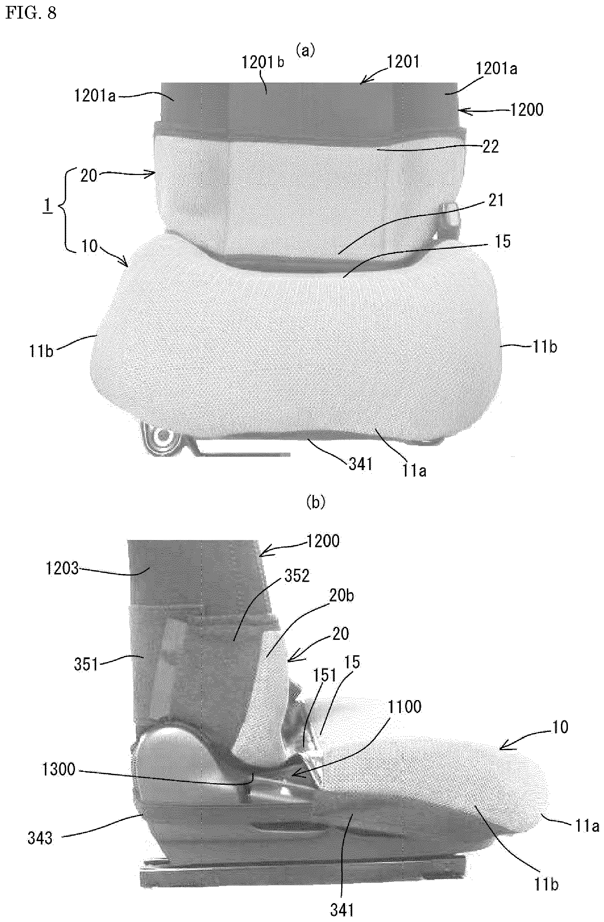

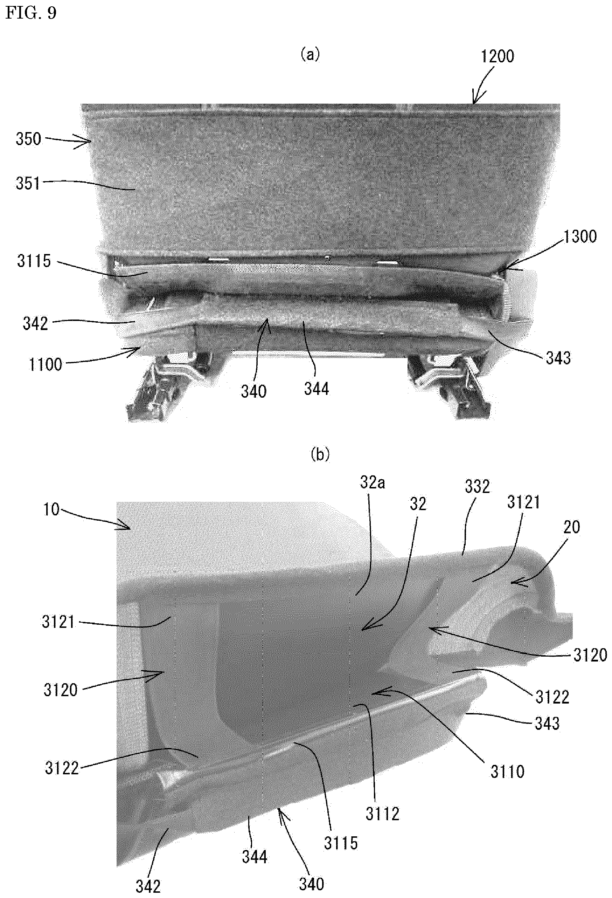

The present invention will be hereinafter described in more detail based on an embodiment illustrated in the drawings. FIG. 1 is a plan view illustrating a seat cover 1 of this embodiment, and FIG. 2 and FIGs. 3(a) to (c) are sectional views of the seat cover 1 taken along the cutting lines in FIG. 1. FIGs. 4(a) to (b) illustrate a seat 1000 with the seat cover 1 attached thereto, and FIG. 5 to FIG. 7 are sectional views along the cutting lines in FIGs. 4(a) to (b). Further, FIGs. 8 and FIGs. 9 are digital photographic images of the seat cover 1 of this embodiment. As illustrated in these drawings, the seat cover 1 of this embodiment includes a cushion cover part 10, a back cover part 20, and an attaching means 30.

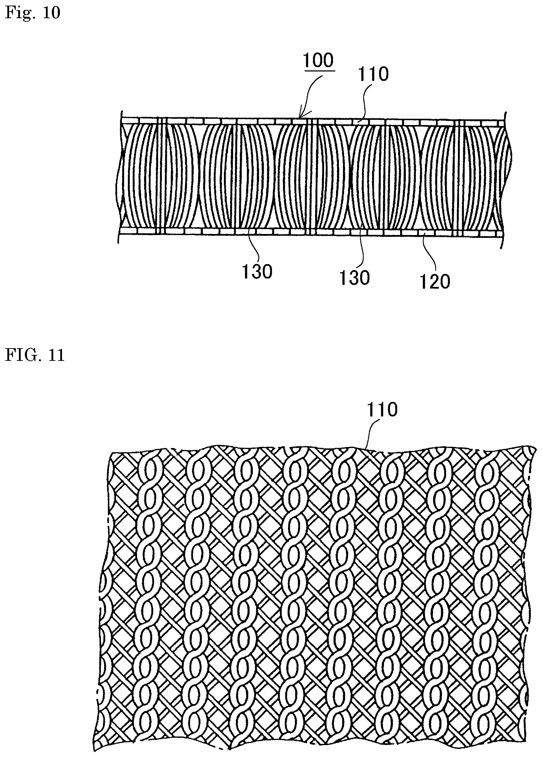

As a material forming both the cushion cover part 10 and the back cover part 20, a three-dimensional knitted fabric 100 disclosed in Patent Document 3, Patent Document 4, and so on is adopted in this embodiment. Specifically, as illustrated in FIG. 10 to FIG. 12, the three-dimensional knitted fabric 100 includes a pair of ground knitted fabrics 110, 120 arranged apart from each other and many connecting yarns 130 reciprocating between the pair of ground knitted fabrics 110, 120 to connect them.

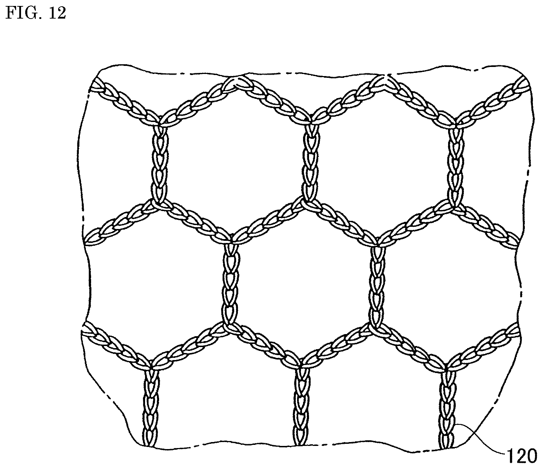

As illustrated in FIG. 11, as the ground knitted fabric 110, one in which meshes are formed in a flat knitted fabric structure that is continuous in both a wale direction and a course direction, using yarns of twisted fibers is used, for instance. Further, as illustrated in FIG. 12, the other ground knitted fabric 120 has honeycomb meshes formed using yarns of twisted short fibers, for instance. Further, the other ground knitted fabric 120 has larger meshes than those of the ground knitted fabric 110. It should be noted that these are merely examples, and the structures of the ground knitted fabrics 110, 120 are not limited to the fine structure and the honeycomb structure, and may be other knitted fabric structures.

As illustrated in FIG. 10, the connecting yarns 130 are knitted between the ground knitted fabrics 110, 120 so as to keep a predetermined interval between the ground knitted fabric 110 and the other ground knitted fabric 120. Consequently, predetermined rigidity is imparted to the three-dimensional knitted fabric 100.

The three-dimensional knitted fabric 100 can be given necessary stiffness depending on the thickness or the like of the ground yarns forming the ground knitted fabrics 110, 120, but the ground yarns whose thickness is within a range not making a knitting work difficult are preferably selected. Further, the ground yarns may be monofilaments, but in consideration of texture, soft surface touch, and so on, multifilaments or spun yarns may be used. The connecting yarns 130 are preferably monofilaments to have an appropriate restoring force, and their thickness is preferably within a range from 167 decitex to 1110 decitex.

The material of the ground yarns and the connecting yarns 130 is not limited, and examples thereof include synthetic fibers and regenerated fibers such as polypropylene, polyester, polyamide, polyacrylonitrile, and rayon, and natural fibers such as wool, silk, and cotton. These materials each may be used alone or any combination of these may be used. Preferably, the material is a thermoplastic polyester-based fiber represented by polyethylene terephthalate (PET), polybutylene terephthalate (PBT), and the like, a polyamide-based fiber represented by nylon 6, nylon 66, and the like, or a combination of two kinds or more of these fibers.

Further, the shape of the ground yarns and the connecting yarns 130 is not limited either, and round cross-section yarns or modified cross-section yarns may be used. Further, when the connecting yarns 130 are arranged between the ground knitted fabrics 110, 120, they may be knitted to extend substantially perpendicularly, or they may be knitted to cross one another in a substantially X-shape in the middle, and a bundle of the multiple yarns may be knitted at a time in either of the above cases.

The three-dimensional knitted fabric 100 can support a load of an occupant seated on the seat cover 1 by the deformation of the meshes forming the ground knitted fabrics 110, 120, the deformation due to the tilting or buckling of the connecting yarns 130, and the restoring force that a connecting yarn adjacent to the deformed connecting yarn 130 has and gives a spring characteristic to the deformed connecting yarn 130, and the three-dimensional knitted fabric 100 can have a flexible structure having a soft spring characteristic and not undergoing stress concentration, and thus is high in followability to body movement. Accordingly, even if the load is repeatedly applied thereto when the occupant gets in/out of the vehicle, it does not easily wear out, and is resistant against tearing by friction owing to the rigidity of the ground knitted fabrics 110, 120 and the connecting yarns 130. Therefore, it is suitable as the material of the seat cover 1 that is repeatedly given a load to be easily damaged as in a seat of a home delivery vehicle. A three-dimensional woven fabric, a three-dimensional nonwoven fabric, or the like other than the three-dimensional knitted fabric 100 is usable, but the three-dimensional knitted fabric 100 is preferably used because, owing to the restoring force of the ground knitted fabrics 110, 120 and the connecting yarns 130, it can efficiently absorb a feeling of something foreign when the occupant is seated with a handy terminal attached, and also because it is excellent in vibration absorption characteristic as described also in Patent Documents 3, 4.

The cushion cover part 10 is large enough to entirely cover at least an upper surface 1101 out of surfaces of a seat cushion part 1100 of the seat 1000 to which the seat cover 1 is to be attached (see FIGs. 4(a), (b), FIG. 5, and FIGs. 8(a), (b)). In this embodiment, as illustrated in FIGs. 4(a), (b), FIG. 5, and FIGs. 8(a), (b), the cushion cover part 10 has such a size that not only it covers the upper surface 1101 of the seat cushion part 1100 but also its peripheral edge portion 11 covers a range beyond the range of the upper surface 1101 up to a position slightly thereunder, that is, a front portion 11a of the peripheral edge portion 11 covers at least part of a front surface 1102 of the seat cushion part 1100 and side portions 11b of the peripheral edge portion 11 cover at least part of side surfaces 1103, 1103 of the seat cushion part 1100. Further, as illustrated in FIG. 5 and FIGs. 8(a), (b), the cushion cover part 10 has such a size that its rear portion 15 is located near the seat back part 1200. As described above, an occupant of a home delivery vehicle frequently gets in/out of the vehicle, and the vicinity of the door-side side surface 1103 and the vicinity of the front surface 1102 of the seat cushion part 1100 are likely to be damaged. Therefore, the cushion cover part 10 preferably has a size large enough to cover at least ranges, of the front surface 1102 and the side surfaces 1103, 1103 of the seat cushion part 1100, slightly beyond the vicinity of boundaries with the upper surface 1101.

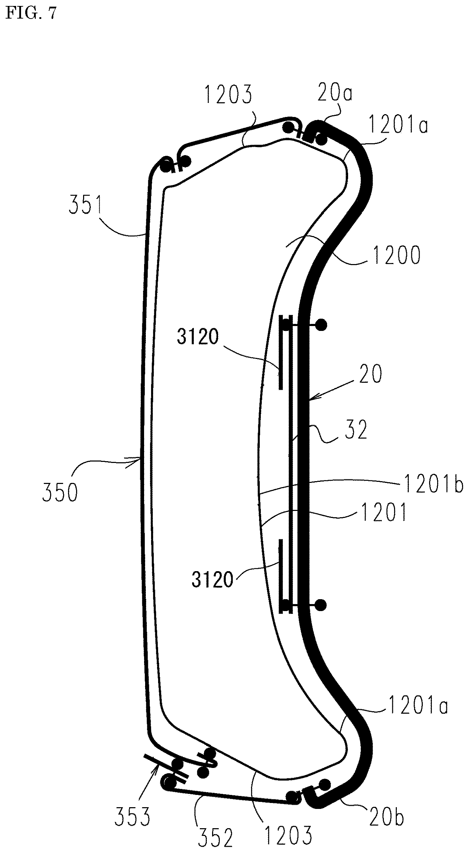

As illustrated in FIG. 7 and FIG. 8(a), the back cover part 20 has substantially the same width as the width of a front surface 1201 out of surfaces of the seat back part 1200. In this embodiment, it is slightly wider than the width of the front surface 1201 so that it can cover partial ranges of side surfaces 1203, 1203 of the seat back part 1200. As illustrated in FIG. 5, the back cover part 20 preferably has such a length along the up-down direction of the seat back part 1200 that its upper portion 22 is located within a range from a pelvis top corresponding part up to a chest middle corresponding part in the seat back part 1200 when the lower portion 21 is located near the boundary position between the seat cushion part 1100 and the seat back part 1200. Specifically, the upper portion 22 which is located in the range from the pelvis top corresponding part up to the chest middle corresponding part is located at a position preferably in a 100 to 350 mm range, more preferably in a 150 to 300 mm range upward along the front surface 1201 of the seat back part 1200 from a reference point (P point in FIG. 5) on the upper surface 1101 of the seat cushion part 1100 which point is located directly under the front surface 1201 of the seat back part 1200.

As described above, since many workers of home delivery companies carry a handy terminal attached near the waist, the vicinity of a portion behind the pelvis is most likely to be damaged when the worker sits on a seat of a home delivery vehicle. Therefore, even if the back cover part 20 is formed of the three-dimensional knitted fabric 100 or the like that has a higher function and thus is more expensive than ordinary two-dimensional cloth materials, a structure in which the back cover part 20 covers only this range that is likely to be damaged can minimize the necessary use amount of the three-dimensional knitted fabric 100 or the like to make it possible to provide the seat cover 1 at a low cost.

The attaching means 30 connects the rear portion of the cushion cover part 10 and the lower portion of the back cover part 20 and includes band-shaped elastic members 3120 disposed near the boundary between the seat cushion part 1100 and the seat back part 1200. The back cover part 20 and the cushion cover part 10 are both joined to the band-shaped elastic members 3120 of the attaching means 30, and therefore, when their elastic force presses the back cover part 20 against the front surface 1201 of the seat back part 1200, the cushion cover part 10 is also positioned at a predetermined attachment position. Therefore, an attachment work of the back cover part 20 and the cushion cover part 10 is easy and they can be attached in a short time.

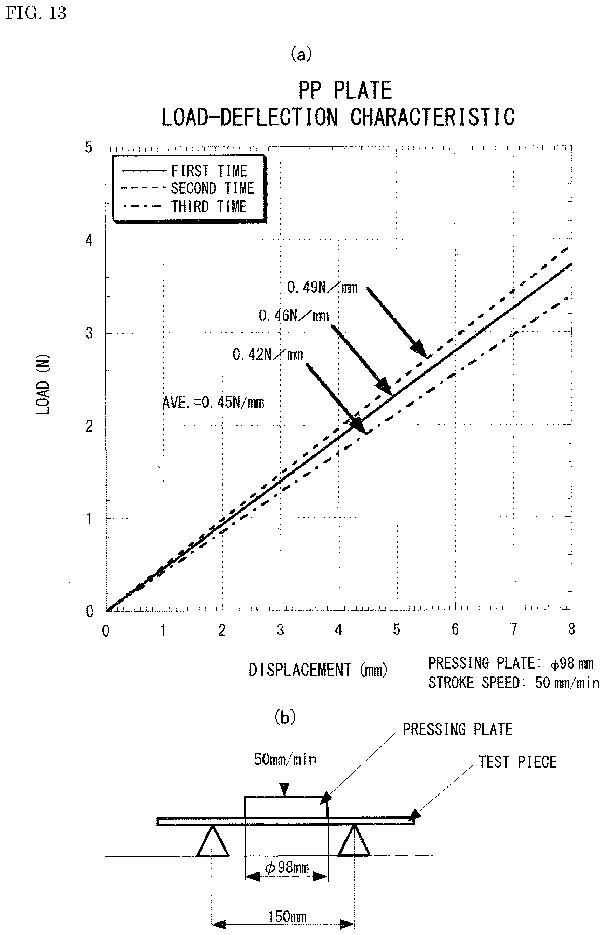

More specifically, the attaching means 30 has a first support plate 32 (see FIG. 2, FIGs. 3, FIGs. 4, and FIG. 9(b)) in addition to the aforesaid band-shaped elastic members 3120. The first support plate 32 is fixed to the rear surface side of the back cover part 20 by sewing or the like. A material of the first support plate 32 is not limited, but in this embodiment, a plate-shaped member made of polypropylene is used. Note that the first support plate 32 preferably has flexibility high enough not to give a feeling of something foreign to a seated person when he/she presses his/her back against the back cover part 20. In order to have the predetermined flexibility, the first support plate 32 preferably has a load-deflection characteristic within a range of 0.4 to 0.5 N/mm (0.45 N/mm on average), the load-deflection characteristic being measured when an about 0.8 to 1.2 mm thick test piece of the plate-shaped member is put on support members disposed at a 150 mm interval and is pressed at 50 mm/min with a pressing plate having a 98 mm diameter with its center being aligned with the middle of the test piece, as illustrated in FIGs. 13(a), (b). The first support plate 32 has a size substantially equal to or slightly smaller than the outer size of the back cover part 20. Its shape is not limited either and may be substantially elliptical or the like, but is substantially rectangular in this embodiment.

Further, the width of the first support plate 32 is preferably within a range between side supports 1201a, 1201a bulging forward near side portions of the seat back part 1200. Having the width with which it does not overlap with the left and right side supports 1201a, 1201a when the elasticity of the band-shaped elastic members 3120 presses the first support plate 32 against the front surface 1201 of the seat back part 1200, the first support plate 32 has increased adhesion to a middle range 1201b, of the front surface 1201, located between the side supports 1201a, 1201a (see FIG. 7).

As described above, the band-shaped elastic members 3120 press an upper portion 32a of the first support plate 32 against the front surface 1201 (in particular, the middle range 1201b) of the seat back part 1200 to position it. This can reduce the forward floating of the back cover part 20 to contribute to the alleviation of the feeling of something foreign given to the back of the seated person.

The attaching means 30 further has a second support plate 3110. The second support plate 3110 joins the back cover part 20 and the cushion cover part 10. Specifically, as illustrated in FIG. 2 and FIG. 5, first, one end portion 3111 of the second support plate 3110 is laid on at least one of a lower portion 32b of the first support plate 32 and the lower portion 21 of the back cover part 20, in this embodiment, on both of these, a stack of these three are covered with a first cloth member 331, and they are integrated by sewing. The other end portion 3112 of the second support plate 3110 is connected to the rear portion 15 of the cushion cover part 10, but in this embodiment, a rear portion extension cloth 151 formed of a nonwoven fabric or the like is sewn to the rear portion 15 to extend rearward, and the other end portion 3112 is joined to a rear edge 151a of the rear portion extension cloth 151. The sewing of the rear portion extension cloth 151 is intended to adopt a fabric thinner than the three-dimensional knitted fabric 100 forming the cushion cover part 10 in consideration of insertability to a gap 1300 located at the boundary between the seat back part 1200 and the seat cushion part 1100, but it is of course possible to elongate the rear portion 15 of the cushion cover part 10 formed of the three-dimensional knitted fabric 100, rearward to insert it to the gap 1300 between the seat back part 1200 and the seat cushion part 1100 without sewing the rear portion extension cloth 151. In this case, the other end portion 3112 of the second support plate 3110 is directly joined to the edge of the rear portion 15. Note that a material and a preferable characteristic of the second support plate 3110 are the same as those of the first support plate 32 described above.

The band-shaped elastic members 3120 are formed of a material having predetermined elasticity, for example, formed of rubber bands and each have a width within a range of, for example, 10 to 150 mm and a predetermined length (see FIG. 9(b)). Their lengthwise one-side end portions 3121 are coupled to some place of the back cover part 20 or the first support plate 32. In this embodiment, the end portions 3121 are laid on the upper portion 22 of the back cover part 20 and the upper portion 32a of the first support plate 32, and they are altogether covered with a second cloth member 332 to be integrated by sewing. The lengthwise other end portions 3122 are joined to the other end portion 3112 of the second support plate 3110 by sewing. In this embodiment, the rear edge 151a of the rear portion extension cloth 151 extending rearward from the cushion cover part 10 is also integrated together by sewing.

The length of the band-shaped elastic members 3120 is shorter than a distance (L1 in FIG. 2) between the upper portion 32a of the first support plate 32 and the other end portion 3112 of the second plate 3110 when the first support plate 32 and the second support plate 3110 are linearly arranged without being folded at their joint portion, that is, at the lower portion 32b of the first support plate 32 and the end portion 3111 of the second support plate 3110. Therefore, when the end portions 3121 of the band-shaped elastic members 3120 are coupled to the upper portion 32a of the first support plate 32 and their other end portions 3122 are coupled to the other end portion 3112 of the second support plate 3110, the elastic restoring force acts to cause the first support plate 32 and the second support plate 3110 to approach each other in a direction in which they become folded at the aforesaid lower portion 32b and end portion 3111.

Therefore, when the second support plate 3110 is inserted to the gap 1300 between the seat back part 1200 and the seat cushion part 1100, the first support plate 32 is biased in the direction in which it approaches the second support plate 3110, so that the first support plate 32 and the back cover part 20 coupled to the first support plate 32 are pressed against the front surface 1201 of the seat back part 1200. Consequently, the attachment position of the back cover part 20 is determined. At the same time, the other end portion 3112 of the second support plate 3110 is pressed against the lower surface 1204 of the seat back part 1200. Consequently, the rear portion 15 of the cushion cover part 10 (in this embodiment, "the rear portion 15 of the cushion cover part 10" also includes the rear portion extension cloth 151) together with the second support plate 3110 is pressed against the lower surface of the seat back part 1200. As a result, only inserting the second supporting plate 3110 to the gap 1300 between the seat back part 1200 and the seat cushion part 1100 results in the determination of the attachment position of the back cover part 20 and at the same time, results in the determination of the attachment position of the rear portion 15 of the cushion cover part 10.

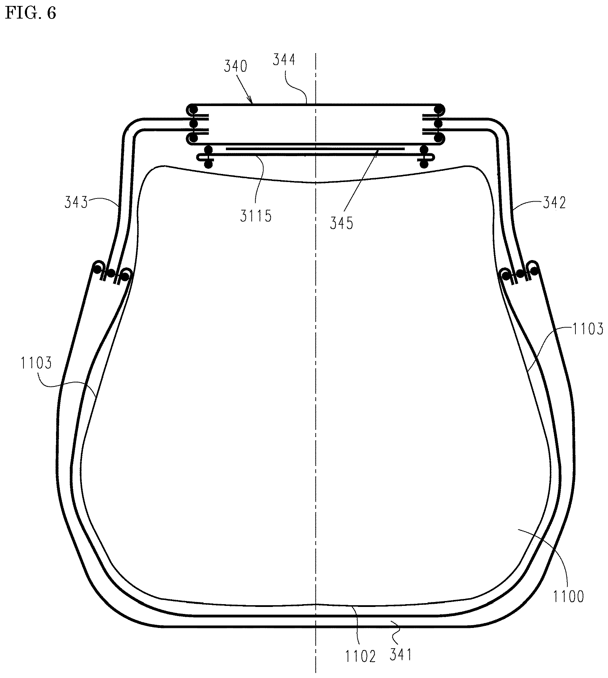

Here, an attachment cloth 341 formed of a nonwoven fabric or the like is sewn to the outer side of the peripheral edge portion 11 of the cushion cover part 10. The attachment cloth 341 is provided from a range corresponding to the front surface 1102 up to ranges corresponding to the side surfaces 1103, 1103 of the seat cushion part 1100, and one-side ends of rubber bands 342, 343 extending rearward are connected to rear portions of the ranges corresponding to the side surfaces 1103, 1103, and the other ends of the rubber bands 342, 343 are connected to each other through a connecting cloth member 344 (see FIG. 6 and FIGs. 9(a), (b)). This connecting cloth member 344 is preferably connected to the second support plate 3110 inserted to the gap 1300 between the seat back part 1200 and the seat cushion part 1100 as in this embodiment.

A means for the connection to the second support plate 3110 may be any, and if the second support plate 3110 projects rearward from the gap 1300 between the seat back part 1200 and the seat cushion part 1100, the direct connection to the second support plate 3110 is also possible, but in this embodiment, as illustrated in FIG. 5 and FIG. 6, since the other end portion 3112 of the second support plate 3110 is connected to the rear portion extension cloth 151 of the cushion cover part 10, a connecting extension cloth 3115 is sewn to the rear edge 151a of the rear portion extension cloth 151, and this connecting extension cloth 3115 is drawn out rearward from the gap 1300 between the seat back part 1200 and the seat cushion part 1100 to be used for the indirect connection to the second support plate 3110. A hook-and-loop fastener 345 is provided between the connecting extension cloth 3115 drawn out rearward and the connecting cloth member 344 to connect them. Consequently, the cushion cover part 10 stably covers the upper surface 1101, the front surface 1102, and the side surfaces 1103, 1103 of the seat cushion part 1100. In this embodiment, the aforesaid attachment cloth 341, rubber bands 342, 343, connecting cloth member 344, and hook-and-loop fastener 345 constitute an auxiliary fixing member 340 for the cushion cover part.

Further, fixing extension cloths 351, 352 formed of a nonwoven fabric or the like are sewn to widthwise side edge portions 20a, 20b of the back cover part 20 respectively. In this embodiment, the fixing extension cloth 351 is formed of a plurality of cloths sewn together and is long enough to be extended from the side surface 1203 of the seat back part 1200 to the rear surface of the seat back part 1200 to reach the other side surface 1203, and the fixing extension cloth 351 is connected to the other fixing extension cloth 352 on the other side surface 1203 side through a hook-and-loop fastener 353 (see FIG. 1, FIG. 3(a), FIG. 7, and FIG. 8(b)). Consequently, the back cover part 20 is stably fixed to the seat back part 1200. In this embodiment, the fixing extension cloths 351, 352 and the hook-and-loop fastener 353 constitute an auxiliary fixing member 350 for the back cover part.

According to this embodiment, the back cover part 20 is provided only on the range that is likely to be damaged by friction or the like due to a handy terminal carried on the vicinity of the waist or an object put in a hip-pocket, that is, only on a range, in the seat back part 1200, from the upper surface 1101 of the seat cushion part 1100 along the front surface 1201 of the seat back part 1200 up to the pelvis top corresponding part (the vicinity of the fourth lumbar vertebra of the backbone) or only on a range from the upper surface 1101 of the seat cushion part 1100 along the front surface 1201 of the seat back part 1200 up to the chest middle corresponding part (the vicinity of the ninth thoracic vertebra of the backbone). That is, the back cover part 20 has such a size that its upper portion 22 is located in the range from a position at or higher than the pelvis top corresponding part (the vicinity of the fourth lumbar vertebra of the backbone) up to a position at or lower than the chest middle corresponding part (the vicinity of the ninth thoracic vertebra of the backbone). This can minimize the necessary amount of the material used for forming the back cover part 20 and makes it possible to manufacture the seat cover 1 at a low cost even if the three-dimensional knitted fabric 100 or the like not easily damaged by friction or the like is used as the material forming the back cover part 20.

Further, since the back cover part 20 has a length substantially half of the up-down length of the whole seat back part 1200 or less owing to the aforesaid limitation of the position of its upper portion 22, the back cover part 20 can be more easily attached in close contact with the front surface 1201 of the seat back part 1200 owing to the elastic restoring force of the band-shaped elastic members 3120 used for a pressing portion 31 forming the attaching means 30. Moreover, the band-shaped elastic members 3120 bias the first support plate 32 provided on the rear surface of the back cover part 20 and the second support plate 3110 connected to the cushion cover part 10 in the approaching direction, and when the first support plate 32 and the second support plate 3110 are made apart from each other and the second support plate 3110 is inserted to the gap 1300 located at the boundary between the seat back part 1200 and the seat cushion part 1100, the band-shaped elastic members 3120 press the back cover part 20 against the front surface 1201 of the seat back part 1200 and at the same time, press the second support plate 3110 against the lower surface 1204 of the seat back part 1200 as described above.

Therefore, when the first support plate 32 is located to be capable of abutting on the front surface 1201 of the seat back part 1200 and the second support plate 3110 is inserted to the gap 1300 located at the boundary between the seat back part 1200 and the seat cushion part 1100, it is possible to determine the attachment positions of the back cover part 20 and the rear portion 15 of the cushion cover part 10 (including the rear portion extension cloth 151) at the same time and easily. At this time, the cushion cover part 10 is kept placed so as to cover part of the front surface 1102 and part of the side surfaces 1103, 1103 of the seat cushion part 1100 from above.

Thereafter, when the connecting cloth member 344 of the auxiliary fixing member 340 for the cushion cover part is extended to the rear side of the seat cushion part 1100 to be joined to the connecting extension cloth 3115 through the hook-and-loop fastener 345, the cushion cover part 10 is stably attached. Similarly, when the fixing extension cloths 351, 352 of the auxiliary fixing member 350 for the back cover part are extended to the rear side of the seat back part 1200 to be joined to each other through the hook-and-loop fastener 353, the back cover part 20 is stably attached.

At the time of the removal, the joining between the connecting cloth member 344 of the auxiliary fixing member 340 for the cushion cover part and the connecting extension cloth 3115 through the hook-and-loop fastener 345 is canceled and the joining between the fixing extension cloths 351, 352 of the auxiliary fixing member 350 for the back cover part through the hook-and-loop fastener 353 is canceled, and by thereafter pulling the second support plate 3110 forward together with the rear portion extension cloth 151 included in the rear portion 15 of the cushion cover part 10, the easy removal is possible. Therefore, the quick attachment and removal of the seat cover 1 are possible, and especially in a home delivery company that owns many home delivery vehicles that occupants frequently get in/out of, the work of changing the seat cover 1 is facilitated and the change frequency of the seat 1000 itself can be reduced, contributing to a great reduction in the maintenance work and the maintenance cost.

Further, as described above, the front portion 11a of the cushion cover part 10 covers at least part of the front surface 1102 of the seat cushion part 1100 and its side portions 11b cover at least part of the side surfaces 1103, 1103 of the seat cushion part 1100. Further, the rear portion 15 of the cushion cover part 10 (including the rear portion extension cloth 151) is connected to the band-shaped elastic members 3120 together with the second support plate 3110 and is inserted to the gap 1300 between the seat back portion 1200 and the seat cushion part 1100. Accordingly, while attached to the seat cushion part 1100, the cushion cover part 10 is more difficult to move as it goes toward the front portion 11a and is easier to move and more susceptible to the elastic restoring force of the band-shaped elastic members 3120 as it goes toward the rear portion 15. In other words, the cushion cover part 10 is disposed such that it has higher rigidity as it goes toward the front portion 11a and has lower rigidity as it goes toward the rear portion 15.

Further, the upper portion 32a of the first support plate 32 is integrated with the upper portion 22 of the back cover part 20, the back cover part 20 is positioned by being pressed against the front surface 1201 of the seat back part 1200 owing to the elastic force of the band-shaped elastic members 3120 and is fixed using the fixing extension cloths 351, 352 extended around the seat back part 1200. Further, the end portion 3111 of the second support plate 3110 is joined to the lower portion 32b of the first support plate 32 and the lower portion 21 of the back cover part 20, and the second support plate 3110 is inserted to the gap 1300 between the seat back part 1200 and the seat cushion part 1100 to be connected to the band-shaped elastic members 3120 together with the rear portion 15 of the cushion cover part 10 (the rear portion extension cloth 151). Therefore, the upper portion 22 and the lower portion 21 of the back cover part 20 are both connected to the band-shaped elastic members 3120, but the lower portion 21 located below the fixing extension cloths 351, 352 has a smaller binding force to the seat back part 1200 and more easily moves in the width direction of the seat 1000. Therefore, it can be said that, in the state in which the back cover part 20 is attached to the seat back part 1200, its lower portion 21 is lower in rigidity than its upper portion 22.

Therefore, the rear portion 15 of the cushion cover part 10 and the lower portion 21 of the back cover part 20 more easily move in the width direction of the seat 1000 since these portions have low rigidity in the state in which the seat cover 1 is attached. On the other hand, since the elastic restoring force of the band-shaped elastic members 3120 acts on both of these portions, they are quickly returned to predetermined positions even if displaced when the occupant gets in/out. Therefore, the occupant can sit on the seat 1000 on which the seat cover 1 is set at an appropriate position. Consequently, the seat cover 1 can quickly follow body movement during traveling owing to the elastic restoring force of the band-shaped elastic members 3120 and also is improved in the characteristic of absorbing vibration transmitted from a road surface and the vehicle body. In particular, the use of the three-dimensional knitted fabric 100 as the material of the cushion cover part 10 and the back cover part 20 as in this embodiment can further improve the body movement followability and the vibration absorbency.

### Reference Signs List

- 1: seat cover
- 10: cushion cover part
- 15: rear portion
- 151: rear portion extension cloth
- 20: back cover part
- 30: attaching means
- 32: first support plate
- 3110: second support plate
- 3120: band-shaped elastic member
- 100: three-dimensional knitted fabric
- 340: auxiliary fixing member for cushion cover part
- 350: auxiliary fixing member for back cover part
- 1000: seat
- 1100: seat cushion part
- 1200: seat back part

## Claims

1. A seat cover which has a cushion cover part for covering a seat cushion part of a seat and a back cover part for covering a seat back part of the seat,
wherein a rear portion of the cushion cover part and a lower portion of the back cover part are connected through an attaching means having a band-shaped elastic member disposed near a boundary between the seat cushion part and the seat back part,
wherein, in a state in which the seat cover is attached to the seat cushion part and the seat back part, the rear portion of the cushion cover part and the lower portion of the back cover part are relatively lower in rigidity than portions closer to a front portion of the cushion cover part and closer to an upper portion of the back cover part, and
wherein the band-shaped elastic member is capable of exhibiting a function of returning the lower portion of the back cover part and the rear portion of the cushion cover part from displacement and a function of absorbing externally input vibration.

2. The seat cover according to claim 1,
wherein the attaching means has, in addition to the band-shaped elastic member:
a first support plate fixed to a rear surface of the back cover part; and
a second support plate having one end portion joined to a lower portion of at least one of the lower portion of the back cover part and a lower portion of the first support plate and having another end portion joined to the rear portion of the cushion cover part,
wherein the band-shaped elastic member connects at least one of the back cover part and the first support plate to the other end portion of the second support plate to bias an upper portion of the first support plate and the other end portion of the second support plate in an approaching direction, and
wherein the second support plate is spread out in such a direction that the other end portion separates from the upper portion of the first support plate against elasticity of the band-shaped elastic member and is inserted from the other end portion together with the band-shaped elastic member and the rear portion of the cushion cover part to a gap located at the boundary between the seat cushion part and the seat back part to which the seat cover is to be attached, and the elasticity of the band-shaped elastic member presses the first support plate in a direction of a front surface of the seat back part and presses the second support plate in a direction of a lower surface of the seat back part.

3. The seat cover according to claim 1 or 2, wherein a front portion of the cushion cover part covers at least part of a front surface of the seat cushion part.

4. The seat cover according to any one of claims 1 to 3, wherein the back cover part has such a size that an upper portion thereof is located within a range from a pelvis top corresponding part up to a chest middle corresponding part.

5. The seat cover according to any one of claims 2 to 4, wherein the first support plate has a width within a range between two side supports bulging forward on both sides of the seat back part.

6. The seat cover according to any one of claims 2 to 5, wherein the first support plate and the second support plate are plate-shaped members made of synthetic resin.

7. The seat cover according to any one of claims 2 to 6, wherein the attaching means has an auxiliary fixing member for the cushion cover part, the auxiliary fixing member being coupled to the cushion cover part, extended around the seat cushion part or the seat back part, and connected to the second support plate inserted to the gap located at the boundary between the seat cushion part and the seat back part.

8. The seat cover according to any one of claims 2 to 7, wherein the attaching means has an auxiliary fixing member for the back cover part, the auxiliary fixing member being coupled to the back cover part and extended to a rear surface side of the seat back part.

9. The seat cover according to any one of claims 1 to 8, wherein at least the back cover part is formed of a three-dimensional knitted fabric.
